# EUROPÄISCHE PATENTANMELDUNG

(11) **EP 4 141 585 A1**
(43) Veröffentlichungstag der Anmeldung: **01.03.2023**
(21) Anmeldenummer: 21192971.6
(22) Anmeldetag: 25.08.2021
(51) Int. Cl.: G05B 19/042, G05B 19/418

(54) **VERFAHREN ZUM ZULASSEN EINER EINBINDUNG EINES GERÄTES IN EIN AUTOMATISIERUNGSSYSTEM, VORRICHTUNG ZUM ZULASSEN EINER EINBINDUNG EINES GERÄTES IN EIN AUTOMATISIERUNGSSYSTEM UND AUTOMATISIERUNGSSYSTEM**

(71) Anmelder: Siemens Aktiengesellschaft, 80333 München (DE)
(72) Erfinder: Falk, Rainer, 85586 Poing (DE)

(57) **Zusammenfassung**

Bei dem Verfahren zum Zulassen einer Einbindung eines Geräts (22) in ein Automatisierungssystem (10) wird ein Bewegungsverlauf des Geräts ermittelt und es wird die Einbindung des Geräts in Abhängigkeit von dem Bewegungsverlauf zugelassen oder abgelehnt.

Die Vorrichtung ist zur Ausführung eines solchen Verfahrens eingerichtet und eingerichtet, eine Information über einen Bewegungsverlauf des Geräts zu erfassen und eine Einbindung des Geräts in Abhängigkeit des Bewegungsverlaufs zuzulassen oder abzulehnen.

Das Automatisierungssystem ist mit einer solchen Vorrichtung und zur Ausführung eines Verfahrens ausgebildet.

## Beschreibung

Die Erfindung betrifft ein Verfahren zum Zulassen einer Einbindung eines Gerätes in ein Automatisierungssystem, eine Vorrichtung zum Zulassen einer Einbindung eines Gerätes in ein Automatisierungssystem sowie ein Automatisierungssystem.

In Automatisierungssystemen, insbesondere in cyberphysikalischen Systemen, etwa in automatisierten Fertigungsanlagen, müssen Zugriffsberechtigungen für in das Automatisierungssystem einzubindende Geräte, etwa Fertigungsgeräte, eingerichtet werden. Bei der Einbindung der Geräte in das Automatisierungssystem müssen insbesondere Berechtigungsinformationen bereitgestellt werden, etwa Zugriffsberechtigungen wie Geräteauthentifizierungen oder Geräte-Credentials. Diese ermöglichen einen Zugriff auf andere Geräte oder Dienste-Server über ein Datenkommunikationsnetzwerk. Eine solche Einbindung von Geräten in Automatisierungssysteme wird auch als Onboarding, Provisioning oder Registration bezeichnet. Grundsätzlich wird angestrebt, den manuellen Aufwand zur Einbindung eines Gerätes in ein Automatisierungssystem zu verringern. Dazu stehen Onboarding-, Provisioning-, Credential-Management- und Device-Management-Protokolle zur Verfügung. Mit solchen Protokollen kann ein automatisiertes Einrichten einer Gerätekonfiguration automatisiert werden.

Allerdings erfordert auch ein solches automatisiertes Einrichten mittels der genannten Protokolle eine manuelle Freigabe durch einen Administrator. Mit einer solchen manuellen Freigabe kann wirksam verhindert werden, dass unbeabsichtigt oder unzulässigerweise Geräte in das Automatisierungssystem eingebunden werden, welche aus Gründen fehlender Berechtigung oder fehlender Vertrauenswürdigkeit des Gerätes nicht in das Automatisierungssystem eingebunden werden dürfen.

Ein solches Einbinden eines Gerätes in ein Automatisierungssystem ist insbesondere dann erforderlich, wenn das Automatisierungssystem und/oder das Gerät erstmalig in Betrieb genommen werden. Grundsätzlich kann ein Einbinden von Geräten in Automatisierungssysteme aber auch dann erforderlich werden, wenn Geräte getauscht werden oder wenn ein zur flexiblen Fertigung ausgebildetes Automatisierungssystem neu konfiguriert werden muss.

Es besteht folglich ein Bedarf, eine Einbindung eines Gerätes in ein Automatisierungssystem mit geringerem manuellem Aufwand zu ermöglichen als bislang bekannt. Insbesondere soll bei einer Einbindung eines Gerätes in ein Automatisierungssystem eine Bereitstellung von Kommunikationszugängen, von Netzwerkzugängen oder von Ressourcenzugangsberechtigungen ohne manuelles Zutun erfolgen können.

Es ist daher Aufgabe der Erfindung, ein verbessertes Verfahren zum Zulassen einer Einbindung eines Gerätes in ein Automatisierungssystem bereitzustellen, welche mit geringem manuellem Aufwand durchführbar ist. Ferner ist es Aufgabe der Erfindung, eine Vorrichtung zu schaffen, mittels welcher sich das Verfahren zur Einbindung eines Gerätes in ein Automatisierungssystem mit geringem manuellem Aufwand durchführen lässt. Zudem ist es Aufgabe der Erfindung, ein verbessertes Automatisierungssystem anzugeben.

Diese Aufgabe der Erfindung mit einem Verfahren mit den in Anspruch 1 angegebenen Merkmalen sowie mit einer Vorrichtung mit den in Anspruch 9 angegebenen Merkmalen und mit einem Automatisierungssystem mit den in Anspruch 13 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zum Zulassen einer Einbindung eines Gerätes in ein Automatisierungssystem wird ein Bewegungsverlauf des Gerätes ermittelt und die Einbindung des Gerätes in Abhängigkeit von dem Bewegungsverlauf zugelassen oder abgelehnt.

Mittels des Zulassens der Einbindung des Gerätes in Abhängigkeit von dem Bewegungsverlauf des Gerätes kann eine sogenannte logische Identifizierung oder Berechtigungsprüfung des Gerätes erfolgen, denn ein ermittelter Bewegungsverlauf erlaubt eine Lokalisierung des Objektes entlang einer Bewegungsbahn und folglich eine logische Identifikation des Objektes. Mittels des erfindungsgemäßen Verfahrens kann also ein räumlicher Bewegungskontext des Gerätes herangezogen werden, um eine Vertrauenswürdigkeit oder eine Identität feststellen zu können und anschließend eine Einbindung des Gerätes in das Automatisierungssystem, abhängig von der Identität oder Vertrauenswürdigkeit, vornehmen zu können. Vorteilhafterweise kann mit dem erfindungsgemäßen Verfahren eine Einbindung in das Automatisierungssystem automatisiert zugelassen werden und problemangepasst und ohne zusätzlichen manuellen Aufwand erfolgen. Denn damit ein Gerät in das Automatisierungssystem eingebunden werden kann, muss das Gerät lediglich an einen bestimmten Ort gebracht werden, um als berechtigtes Gerät durch das Automatisierungssystem akzeptiert zu werden. Dies ist insbesondere beim Erfordernis einer Einbindung einer Vielzahl von Geräten in das Automatisierungssystem vorteilhaft, da in vielen Fällen ohnehin eine Verbringung der Geräte an einen bestimmten Ort zu ihrem Einsatz erforderlich ist und somit ein ohnehin vorgesehener Vorgang zu einer Einbindung der Geräte in das Automatisierungssystem herangezogen werden kann. Insbesondere ist ein Verbringen eines Gerätes an einen bestimmten Ort bei einer Anlieferung des Gerätes für das Automatisierungssystem oder bei einer Lagerung des Gerätes in einem Lager regelmäßig vorgesehen. Solche regelmäßig vorgesehenen Verbringungen des Gerätes an einen bestimmten Ort lassen sich also vorteilhaft für eine automatisierte Zulassung einer Einbindung der Geräte in das Automatisierungssystem heranziehen.

Bevorzugt wird bei dem erfindungsgemäßen Verfahren zum Zulassen einer Einbindung des Gerätes in das Automatisierungssystem zumindest eine weitere Berechtigungsinformation herangezogen und auch anhand der zumindest einen weiteren Berechtigungsinformation die Einbindung zugelassen oder abgelehnt. In dieser Weiterbildung der Erfindung ist es folglich nicht erforderlich, sich allein auf den Bewegungsverlauf des Gerätes zu verlassen, um das Gerät in ein Automatisierungssystem einzubinden oder die Einbindung abzulehnen. Stattdessen ist es ist erfindungsgemäß möglich, den Bewegungsverlauf als eines von mehreren Kriterien für eine Einbindung des Gerätes in das Automatisierungssystem heranzuziehen und so die Sicherheit eines automatischen Provisionierens zu erhöhen.

In einer vorteilhaften Weiterbildung des erfindungsgemäßen Verfahrens umfasst die Einbindung des Geräts in das Automatisierungssystem eine Bereitstellung eines Kommunikationszuganges und/oder eines Netzwerkzuganges und/oder einer Ressourcenzugriffsberechtigung in oder zum Automatisierungssystem an das Gerät. D. h. ein Kommunikationszugang und/oder ein Netzwerkzugang und/oder eine Ressourcenzugriffsberechtigung wird/werden dem Gerät bereitgestellt, sodass das Gerät eine Kommunikation in das Automatisierungssystem hinein oder einen Zugriff auf Ressourcen des Automatisierungssystems bewerkstelligen kann. Zweckmäßigerweise umfasst die Bereitstellung insbesondere die Bereitstellung kryptografischen Schlüsselmaterials, vorzugsweise umfassend ein oder mehrere kryptografische Zertifikate. In dieser Weiterbildung der Erfindung stellt die Einbindung des Gerätes in das Automatisierungssystem also eine Provisionierung oder eine Registration des Gerätes in dem Automatisierungssystem dar. Eine Ressource des Automatisierungssystems kann sich räumlich im Bereich des Automatisierungssystems befinden. Es kann aber ebenso eine räumlich entfernte Ressource wie insbesondere eine Ressource einer Edge-Cloud-Infrastruktur oder einer Backend-Cloud-Infrastruktur oder eines Rechenzentrums sein. Eine gewährte Ressourcenzugriffsberechtigung kann dem Gerät beispielsweise einen Zugriff auf einen Cloud-Service ermöglichen.

Besonders bevorzugt ist das Automatisierungssystem ein Automatisierungsnetzwerk. In dieser Weiterbildung des erfindungsgemäßen Verfahrens kann die Einbindung des Gerätes in das Automatisierungssystem beliebig oft wiederholt werden, sodass eine beliebige Mehrzahl von Geräten in das Automatisierungssystem integriert werden kann. D. h. in dieser Weiterbildung des erfindungsgemäßen Verfahrens bilden jeweils zumindest die in das Automatisierungssystem eingebundenen Geräte Komponenten des Automatisierungsnetzwerkes.

In einer besonders bevorzugten Weiterbildung des erfindungsgemäßen Verfahrens ist der Bewegungsverlauf eine Trajektorie oder der Bewegungsverlauf umfasst eine Trajektorie. In dieser Weiterbildung der Erfindung bildet der Bewegungsverlauf folglich eine Menge von mindestens zwei oder mehr räumlichen Punkten einer Bewegungsbahn, sodass anhand dieser mehreren Punkte einer Bewegungsbahn eine Beurteilung der Vertrauenswürdigkeit oder der Identität des Gerätes wesentlich zuverlässiger erfolgen kann als etwa bei einer reinen ortsbezogenen Zugriffskontrolle. Denn im Falle einer ortsbezogenen Beurteilung der Identität oder der Vertrauenswürdigkeit wird lediglich eine einzige Ortsinformation herangezogen. In der vorgenannten Weiterbildung der Erfindung jedoch kann eine Plausibilität der Beurteilung einer Vertrauenswürdigkeit oder einer Identität des Gerätes anhand der mehreren Punkte oder Ortsinformationen der Bewegungsbahn erfolgen. Es kann also infolge der größeren Komplexität der Daten eine viel zuverlässigere Prüfung des Bewegungsverlaufes und somit eine Plausibilitätsprüfung des Bewegungsverlaufes des Gerätes erfolgen. Anhand dieses zuverlässiger festgestellten Bewegungsverlaufes ist folglich die Sicherheit beim Zulassen der Einbindung des Gerätes in das Automatisierungssystem deutlich verbessert. Infolge der mehreren Ortsinformationen der Bewegungsbahn, d. h. der Trajektorie, also von mindestens zwei oder mehreren Raum- oder Raum-Zeit-Punkten eines Bewegungsverlaufes, wird der Bewegungsverlauf als Kontextinformation sehr zuverlässig ermittelt und kann beim Zulassen der Einbindung des Gerätes mit deutlich erhöhter Verlässlichkeit berücksichtigt werden. Bei der Prüfung, ob es sich bei einer ermittelten Trajektorie oder einem ermittelten Bewegungsverlauf eines Gerätes um eine derartige Trajektorie oder einen derartigen Bewegungsverlauf handelt, die zu einem Zulassen einer Einbindung des Gerätes in ein Automatisierungssystem führen, können die Raum-Punkte oder Raum-Zeit-Punkte mit einer Referenz-Trajektorie oder einem Referenz-Bewegungsverlauf verglichen werden, oder es können Merkmale wie Startpunkt und/oder Zwischenpunkte und/oder Endpunkt und/oder Bewegungsgeschwindigkeit und/oder Beschleunigung und/oder eine weitere zeitliche Ableitung des zeitlich veränderlichen Orts des Geräts ermittelt und mit Referenzwerten verglichen werden. Das Zulassen einer Einbindung des Gerätes kann zeitlich begrenzt gültig sein, d.h. dass in diesem Fall das Einbinden des Geräts in einem Zeitfenster erfolgen muss, das abhängig davon ermittelt wird, wann die Verbringung des Geräts entsprechend seiner Trajektorie oder seines Bewegungsverlaufs erfolgt ist.

In einer zweckmäßigen Weiterbildung des erfindungsgemäßen Verfahrens wird der Bewegungsverlauf des Gerätes mit einem Referenzbewegungsverlauf verglichen und es wird die Abhängigkeit von dem Bewegungsverlauf danach beurteilt, ob die Trajektorie des Gerätes zumindest abschnittsweise einen Maximalabstand oder ein sonstiges, alternatives oder zusätzliches, Abstandsmaß zu dem Referenzbewegungsverlauf unterschreitet. Infolge der Unterschreitung des Maximalabstandes und/oder des Abstandsmaßes von Referenzbewegungsverlauf und Bewegungsverlauf des Gerätes kann also zuverlässig beurteilt werden, ob der Bewegungsverlauf des Gerätes dem Referenzbewegungsverlauf ähnelt oder ob der Bewegungsverlauf des Gerätes von dem Referenzbewegungsverlauf abweicht. Wird eine hinreichende Ähnlichkeit von Bewegungsverlauf des Gerätes und Referenzbewegungsverlauf festgestellt, so wird das Gerät als in das Automatisierungssystem einbindbar beurteilt, also zur Einbindung zugelassen. Anderenfalls kann eine Einbindung des Gerätes in das Automatisierungssystem abgelehnt werden. In dieser Weiterbildung des erfindungsgemäßen Verfahrens kann also folglich eine quantitative Beurteilung des Bewegungsverlaufes vorgenommen werden, sodass die Abhängigkeit von dem Bewegungsverlauf besonders zuverlässig für die Entscheidung über eine Einbindung des Gerätes in das Automatisierungssystem heranziehbar ist.

In einer bevorzugten Weiterbildung des erfindungsgemäßen Verfahrens ist der Referenzbewegungsverlauf ein Referenzbewegungsverlauf einer Person und/oder eines Referenzgerätes. In dem Fall, dass der Referenzbewegungsverlauf der Referenzbewegungsverlauf einer Person ist, handelt es sich zweckmäßig bei der Person um eine berechtigte Person in Bezug auf das Automatisierungssystem. Stimmt also der Bewegungsverlauf des Gerätes mit dem Referenzbewegungsverlauf der berechtigten Person überein, so kann daraus geschlossen werden, dass die berechtigte Person bei ihrem Referenzbewegungsverlauf das Gerät mit sich geführt hat, insbesondere dieses Gerät transportiert oder abgestellt hat. Folglich lässt sich eine logische Zugriffsberechtigung dieses Gerätes von der Vertrauenswürdigkeit oder von der Identität der berechtigten Person einfach und automatisiert ableiten. Insbesondere kann eine solche logische Zugriffsberechtigung sich etwa aus der Situation ergeben, dass das Gerät durch einen bekannten oder überprüften Servicetechniker oder Gerätebediener bewegt, d. h., transportiert oder mit sich geführt wird.

In dem Fall, dass der Referenzbewegungsverlauf der Referenz-bewegungsverlauf eines Referenzgerätes ist, kann sich eine logische Zugriffsberechtigung des Gerätes insbesondere daraus ergeben, dass das Gerät etwa mittels eines vertrauenswürdigen oder identifizierten Referenzgerätes bewegt wird. Insbesondere kann dieses Referenzgerät ein führerloses Transportsystem, etwa ein AGV, d. h. ein "automated guided vehicle", oder ein autonomes Fahrzeug oder ein Roboter oder ein Förderband sein oder eine Drohne bilden.

In einer vorteilhaften Weiterbildung des erfindungsgemäßen Verfahrens wird das Gerät in Abhängigkeit von dem Bewegungsverlauf des Gerätes in eine Positivliste und/oder in eine Negativliste für eine Einbindung in das Automatisierungssystem aufgenommen und/oder es wird das Gerät in Abhängigkeit von dem Bewegungsverlauf des Gerätes in Betrieb genommen und/oder außer Betrieb genommen. Unter Aufnahme des Gerätes in eine Positivliste oder eine Negativliste kann verstanden werden, dass eine digitale Identifizierungsinformation des Geräts, insbesondere eine Netzwerkadresse und/oder eine Seriennummer und/oder ein UUID-Identifier (UUID = engl.: "universally unique identifier") und/oder ein kryptographischer Geräteschlüssel und/oder ein digitales Gerätezertifikat und/oder eine davon abhängig ermittelte Prüfinformation wie vorzugsweise ein kryptographischer Hash-Wert, ermittelt und in die Positivliste oder in die Negativliste eingetragen wird. Weiterhin ist es möglich, dass das Gerät durch einen Geräte-Fingerprint identifiziert wird, der vorzugsweise abhängig von gerätespezifischen Merkmalen einer Netzwerkkommunikationsschnittstelle des Geräts, die sich zweckmäßig durch Bauteilevarianzen ergibt, ermittelt wird, insbesondere ein elektrisches Einschwingverhalten einer Sendeeinheit des Geräts. Mittels der Aufnahme des Gerätes in eine Positivliste oder in eine Negativliste kann das Zulassen der Einbindung des Gerätes in das Automatisierungssystem von einer weiteren Berechtigungsprüfung innerhalb des Automatisierungssystems entkoppelt werden. So kann aufgrund des Einbezugs des Gerätes in eine Positivliste oder in eine Negativliste durch weitere Geräte oder Dienstleistungen innerhalb des Automatisierungssystems eine Vertrauenswürdigkeit oder eine Identität des Gerätes direkt anhand der Positivliste oder anhand der Negativliste festgestellt werden. Eine erneute Überprüfung innerhalb des Automatisierungssystems des Bewegungsverlaufes des Gerätes ist nicht erforderlich. In dieser Weiterbildung der Erfindung können daher Vertraulichkeitsanforderungen an den Bewegungsverlauf des Gerätes sehr leicht erfüllt werden, da die Entscheidung über das Zulassen der Einbindung des Gerätes von weiteren Prüfungen von Zugriffs- und/oder Kommunikationsberechtigungen und/oder von Berechtigungen zum Ressourcenzugriff entkoppelt werden kann. Vorteilhafterweise ist es in dieser Weiterbildung der Erfindung möglich, Bewegungsabläufe von Geräten geheim zu halten, sodass unbefugte Rückschlüsse auf Abläufe innerhalb des Automatisierungssystems, beispielsweise auf Fertigungsabläufe oder auf einen Aufbau von Produktionsanlagen, leicht ausgeschlossen werden können.

In einer vorteilhaften Weiterbildung des erfindungsgemäßen Verfahrens wird der Bewegungsablauf auf dem Gerät und/oder auf einem Server und/oder einem Clouddienst und/oder einer verteilten Datenbank, insbesondere einer Distributed-Ledger-Datenbank und/oder einer Blockchain, gespeichert. In dieser Weiterbildung der Erfindung kann folglich der Bewegungsablauf auf dem Gerät und/oder dem Server und/oder dem Clouddienst und/oder der verteilten Datenbank zur Zulassung der Einbindung des Gerätes in Abhängigkeit von dem Bewegungsverlauf ausgelesen werden.

Die erfindungsgemäße Vorrichtung ist ausgebildet zur Ausführung eines erfindungsgemäßen Verfahrens, wie vorhergehend beschrieben. Die erfindungsgemäße Vorrichtung ist eingerichtet, eine Information über einen Bewegungsverlauf des Gerätes zu erfassen und eine Entscheidung über eine Zulassung zur Einbindung des Gerätes in Abhängigkeit vom Bewegungsverlauf zu treffen. Mittels der erfindungsgemäßen Vorrichtung lässt sich das vorhergehend beschriebene erfindungsgemäße Verfahren umsetzen.

Vorzugsweise weist die erfindungsgemäße Vorrichtung ein Lokalisierungsmodul auf, das zur Erfassung eines Bewegungsverlaufs des Geräts an dem Gerät anordbar oder angeordnet ist und welches Informationen enthaltend den Bewegungsverlauf des Geräts und/oder des Lokalisierungsmoduls aussendet oder bereitstellt. Die erfindungsgemäße Vorrichtung umfasst zudem ein Erfassungsmodul, welches eingerichtet ist, ausgesendete Informationen des Lokalisierungsmoduls mit dem Bewegungsverlauf zu empfangen. Die erfindungsgemäße Vorrichtung umfasst zusätzlich ein Zulassungsmodul, welches zum Zulassen der Einbindung des Geräts abhängig von dem Bewegungsverlauf ausgebildet ist.

Das Zulassungsmodul ist bevorzugt eingerichtet, den Bewegungsverlauf des Lokalisierungsmoduls und folglich des Geräts einem Vergleich mit einem Referenzbewegungsverlauf zu unterziehen und abhängig von dem Vergleich die Einbindung des Geräts in das Automatisierungssystem zuzulassen oder abzulehnen.

Infolge der Anordbarkeit des Lokalisierungsmoduls an dem Gerät ist mittels einer Erfassung des Bewegungsverlaufs des Lokalisierungsmoduls der Bewegungsverlauf des Geräts leicht erfassbar.

Vorzugsweise weist bei der Vorrichtung gemäß der Erfindung das Lokalisierungsmodul zumindest einen RFID-Tag und/oder einen NFC-Tag und/oder einen Bluetooth-Beacon und/oder ein Funkmodul, insbesondere ein 5G-Funkmodul oder ein WLAN-Funkmodul oder Kurzstreckenfunkmodul, auf. Ein Kurzstreckenfunkmodul kann vorzugsweise eine Kurzstreckenfunkkommunikation gemäß IEEE 802.15.4 realisieren.

Vorteilhaft ist das Erfassungsmodul ausgebildet, das Lokalisierungsmodul zu lokalisieren und bildet insbesondere ein Empfangsmodul für Funk-Tags, insbesondere RFID-Tags, und/oder NFC-Tags und/oder Bluetooth-Beacons und/oder für Funkmodule, insbesondere für 5G-Funkmodule oder WLAN-Funkmodule oder für Kurzstreckenfunkmodule.

Bevorzugt wird ein solches Lokalisierungsmodul bei dem zuvor erläuterten erfindungsgemäßen Verfahren herangezogen, um den Bewegungsverlauf des Geräts zu ermitteln. Vorteilhaft ist das Lokalisierungsmodul insbesondere drahtlos lokalisierbar, sodass anhand einer Lokalisierung des Lokalisierungsmoduls der Bewegungsverlauf des Lokalisierungsmoduls und folglich auch des Geräts unaufwändig erfassbar, d. h. ermittelbar, ist. Vorteilhaft kann das Lokalisierungsmodul bei einer Inventarisierung des Geräts an diesem angeordnet werden und insbesondere an oder in einem Inventarisierungslabel angebunden, insbesondere in das Inventarisierungslabel integriert, sein. In dieser Weiterbildung des erfindungsgemäßen Verfahrens wird ein regelmäßig ohnehin durchzuführender Verfahrensschritt zugleich als Verfahrensschritt des erfindungsgemäßen Verfahrens genutzt. Ein Inventarisierungslabel kann insbesondere am Gerät verklebt sein, durch eine Nietverbindung oder Schraubverbindung an gerät befestigt oder angeklipst sein. Ein Inventarisierungslabel kann insbesondere eine Folie oder ein Schild, vorzugsweise ein Kunststoffschild, oder ein Inventarisierungsmodul sein.

Bei der Vorrichtung gemäß der Erfindung ist das Lokalisierungsmodul bevorzugt ausgebildet, einen Geräteidentifizierer des Lokalisierungsmoduls und/oder des Geräts zu erfassen und gemeinsam mit der erfassten Information über die Bewegungshistorie des Geräts zu übermitteln. Somit kann eine eindeutige Identifizierung des Geräts erfolgen.

Das erfindungsgemäße Automatisierungssystem weist eine erfindungsgemäße Vorrichtung wie vorhergehend beschrieben auf und ist zur Ausführung eines erfindungsgemäßen Verfahrens wie vorhergehend beschrieben ausgebildet.

Nachfolgend wird die Erfindung anhand eines in der Zeichnung dargestellten Ausführungsbeispiels näher erläutert. Es zeigen:
- Fig. 1: ein erfindungsgemäßes Automatisierungssystem mit einem erfindungsgemäßen Einbindungsmodul sowie ein Gerät bei der Durchführung des erfindungsgemäßen Verfahrens zur Einbindung des Geräts in das Automatisierungssystem schematisch in einer Prinzipskizze sowie
- Fig. 2: den Ablauf des erfindungsgemäßen Verfahrens gem. Fig. 1 zur Einbindung des Geräts in das Automatisierungssystem gem. Fig. 1 schematisch in einem Blockdiagramm.

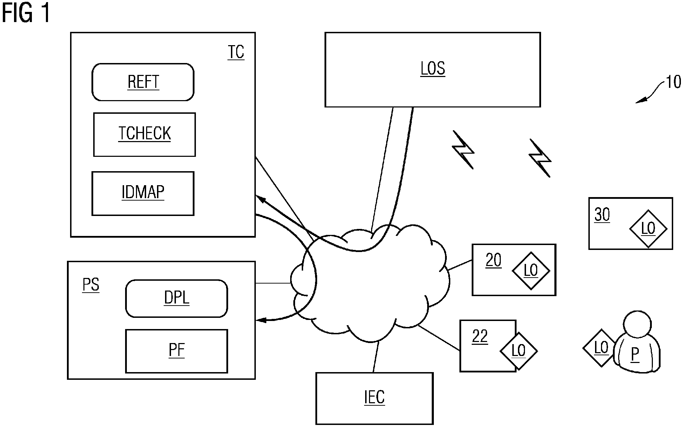

Das in Fig. 1 dargestellte industrielles Automatisierungssystem 10 ist ein cyber-physikalisches System in Gestalt einer automatisierten Fertigungsanlage. In weiteren, nicht eigens dargestellten Ausführungsbeispielen, welche im Übrigen dem dargestellten Ausführungsbeispiel entsprechen, ist das Automatisierungssystem ein Prozessleitsystem einer verfahrenstechnischen Anlage, beispielsweise einer Biotechnikanlage.

Das Automatisierungssystem 10 bildet ein industrielles Netzwerk in Gestalt eines Internet-der-Dinge-Netzwerks, in welches eine Vielzahl von Industriegeräten, beispielsweise Werkzeuge 20 und Werkzeugsensoren 30, eingebunden sind. Die Werkzeuge 20 und die Werkzeugsensoren 30 umfassen im dargestellten Ausführungsbeispiel digitale Steuer- und Kommunikationsmodule, welche mittels kryptographisch geschützter Kommunikation im Automatisierungssystem 10 kommunizieren.

Zur Einbindung der Industriegeräte in das industrielle Netzwerk des Automatisierungssystem 10 müssen die Werkzeuge 20 und die Werkzeugsensoren 30 mit Berechtigungsinformationen versehen werden. Solche Berechtigungsinformationen bilden im dargestellten Ausführungsbeispiel kryptographische Zertifikate zur kryptographisch geschützten Kommunikation sowie Berechtigungsinformationen zum Zugriff auf Ressourcen des Automatisierungssystems 10. Mittels der kryptographisch geschützten Kommunikation stellen beispielsweise Werkzeugsensoren 30 Sensordaten bereit, die Informationen über die Beschaffenheit der Werkzeuge 20 enthalten. Mittels der kryptographisch geschützten Kommunikation können zudem die Werkzeuge 20 Konfigurationsdaten zur Werkzeugsteuerung erhalten. Dabei erfolgt im dargestellten Ausführungsbeispiel die Kommunikation über ein industrielles Kommunikationsnetz, vorliegend ein Ethernet. In weiteren, nicht eigens dargestellten Ausführungsbeispielen kann anstelle eines Ethernets auch ein Kommunikationsnetz in Gestalt eines WLANs oder eines 5G-Netzwerks vorliegen. Bei den Ressourcen des Automatisierungssystems 10 kann es sich beispielsweise um zentrale Speicher des Automatisierungssystems 10 handeln, in welchem Konfigurationsdaten der Werkzeuge 20 und Werkzeugsensoren 30 bereitgehalten werden und in welchen Sensordaten 30 zur späteren Nutzung bereitgehalten werden. Darüber hinaus sind Ressourcen in Gestalt weiterer Server IEC vorhanden, die etwa ein Cloud-Backend bilden, einen Device-Management-Server realisieren oder ein Produktionsplanungs- oder -überwachungssystem oder ein Diagnosesystem für vorausschauende Wartung bilden können. Die Werkzeuge 20 und die Werkzeugsensoren 30 können sich mittels des Kommunikationsnetzes sowohl mit den zentralen Speichern als auch mit den Servern IEC verbinden.

Beim Betrieb des Automatisierungssystems 10 sind regelmäßig weitere Komponenten in Gestalt neuer Industriegeräte einzubinden. Beispielsweise muss ein Werkzeug 20 ausgetauscht werden oder innerhalb einer flexiblen Produktion ist ein neues Werkzeug 22, welches im Übrigen gleichartig den Werkzeugen 20 ausgebildet ist, zusätzlich in das Automatisierungssystem 10 einzubinden.

Zur Einbindung des neuen Werkzeugs 22 ist ein Provisionierungs-Server PS vorgesehen, der eine Provisionierungs-Funktionalität PF aufweist, mit welcher die erforderlichen Konfigurationseinstellungen des neuen Werkzeugs 22 vorgenommen werden können. Um zu verhindern, dass ein unberechtigtes neues Werkzeug 22 konfiguriert wird, d.h. in das industrielle Automatisierungssystem 10 als berechtigtes Industriegerät aufgenommen wird, hält das Automatisierungssystem 10 eine Gerätepositivliste DPL vor. Anders als im Stand der Technik bekannt muss diese Gerätepositivliste DPL nicht aufwendig und fehleranfällig durch Administratoren oder Service-Techniker manuell gepflegt werden. Stattdessen wird die Provisionierungs-Funktionalität PF in Abhängigkeit von Lokalisierungsinformationen automatisiert vorgenommen und das neue Werkzeug 22 automatisiert in die Positivliste DPL aufgenommen oder nicht.

Dazu wird erfindungsgemäß ein Lokalisierungsobjekt LO herangezogen, welches im räumlichen Bereich des industriellen Automatisierungssystems 10 durch einen Lokalisierungs-Server LOS lokalisiert werden kann. Das Lokalisierungsobjekt LO kann in das neue Werkzeug 22 integriert sein oder an dem neuen Werkzeug 22 angebunden sein, beispielsweise mittels stoffschlüssiger oder kraftschlüssiger oder formschlüssiger Verbindung. Beispielsweise ist das Lokalisierungsobjekt LO mit dem neuen Werkzeug 22 mittels Klebens und/oder Verschraubens und/oder Verschweißens und/oder Einrastens und/oder Vernietens und/oder Verplombens verbunden.

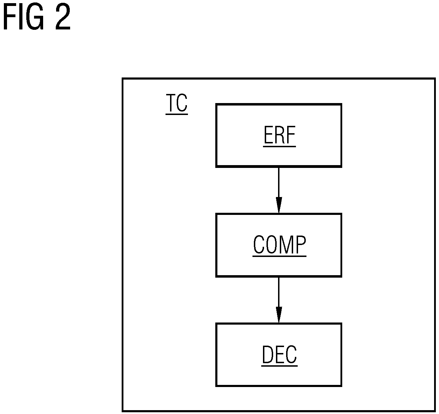

Das Lokalisierungsobjekt LO ist im dargestellten Ausführungsbeispiel als Tracking-Modul in Gestalt eines RFID-Tags und/oder eines Bluetooth-Beacons und/oder eines 5G-Funkmoduls ausgebildet. Der Lokalisierungs-Server LOS ist in an sich bekannter Weise zur Lokalisierung des Lokalisierungsobjekts eingerichtet. Der Lokalisierungs-Server LOS hält in einem Erfassungsschritt ERF (s. a. Fig. 2) nicht allein die aktuelle Position des Lokalisierungsobjekts LO fest, sondern speichert den zeitlichen Bewegungsverlauf des Lokalisierungsobjekts LO, vorliegend als räumliche Bewegungsbahn, also als Trajektorie, des Lokalisierungsobjekts LO. Dabei speichert der Lokalisierungsserver LOS zusätzlich zur räumlichen Bewegungsbahn die Zeit, zu welcher sich das Lokalisierungsobjekt LO an einem bestimmten Ort der Bewegungsbahn aufgehalten hat.

Der Bewegungsverlauf des Lokalisierungsobjekts LO und somit der Bewegungsverlauf des neuen Werkzeugs 22 wird nun in einem Vergleichsschritt COMP mit einem Referenzbewegungsverlauf für das neue Werkzeug 22 verglichen. Der Vergleichsschritt COMP wird von einem zum Vergleich von Bewegungsverlauf und Referenzbewegungsverlauf ausgebildeten Einbindungsmodul TC des Automatisierungssystems 10 ausgeführt. Das Einbindungsmodul TC fungiert als Entscheidungsmodul gemäß der Erfindung.

Der Referenzbewegungsverlauf REFT ist im dargestellten Ausführungsbeispiel der Referenzbewegungsverlauf einer Person P, die zur Bereitstellung von Werkzeugen 20 in das Automatisierungsnetz 10 berechtigt ist, beispielsweise ein mit dieser Aufgabe betrauter Service-Techniker oder eine Maschinenbedienerin. Infolge des Vergleichs TCHECK des Bewegungsverlaufs des Lokalisierungsobjekts LO mit dem Referenzbewegungsverlauf REFT der Person P kann bei einem geringen Maß für eine Abweichung von Bewegungsverlauf und Referenzbewegungsverlauf geschlossen werden, dass die berechtigte Person P das neue Werkzeug 22 transportiert oder im Automatisierungsnetzwerk 10 abgestellt hat. Beispielsweise ist das Maß für die Abweichung die größte Entfernung, die Lokalisierungsobjekt LO und Person P während ihrer Bewegungsverläufe zu einem Zeitpunkt zueinander einnehmen. Die Information, dass die berechtige Person Pdas neue Werkzeug 22 abgestellt hat, gebietet eine Einbindung des neuen Werkezugs 22 in das Automatisierungssystem 10. Zweckmäßig trägt die Person P zur Erfassung des Referenzbewegungsverlaufs REFT ebenfalls ein Lokalisierungsobjekt LO mit sich, sodass Bewegungsverlauf und Referenzbewegungsverlauf REFT zeitgleich erfasst werden können.

In einem alternativen Ausführungsbeispiel kann der Referenz-bewegungsverlauf REFT ein Referenzbewegungsverlauf REFT eines weiteren Objekts sein, etwa ein Lagerfahrzeug, welches das neue Werkzeug 20 aus einem Lager herausbewegt. Auch dieser Referenzbewegungsverlauf REFT wird mit dem Bewegungsverlauf verglichen. In diesem Fall kann davon ausgegangen werden, dass das Lager nur für die Einbindung von für das Automatisierungssystem 10 vorgesehenen Industriegeräten eingerichtet ist, sodass ein Bewegungsverlauf, welches einem Transport des neuen Werkzeugs 20 aus dem Lager mittels des Lagerfahrzeugs entspricht, eine Einbindung des neuen Werkzeugs 22 in das Automatisierungssystem 10 gebietet.

Aufgrund des Vergleichs von Bewegungsverlauf und Referenzbewegungsverlauf REFT trifft das Einbindungsmodul TC des Automatisierungssystems 10 mittels eines Entscheidungsschritts DEC die Entscheidung, dass eine Einbindung des neuen Werkzeugs 22 in das Automatisierungssystem 10 erfolgen darf. Die Einbindung des neuen Werkzeugs 22 wird also zugelassen. Aufgrund dieser Entscheidung wird die Einbindung des neuen Werkzeugs 22 begonnen.

Die Einbindung des neuen Werkzeugs 22 kann grundsätzlich direkt erfolgen. Im dargestellten Ausführungsbeispiel erfolgt die Einbindung des neuen Werkzeugs 22 in das Automatisierungssystem 10 allerdings derart, dass das neue Werkzeug 22 mittels des Provisionierungs-Servers PS in die Positivliste DPL aufgenommen wird, indem eine eindeutige Kennung IDMAP des neuen Werkzeugs 22 in die Positivliste DPL eingetragen wird. So wird bei einer Anforderung von Zertifikaten zur verschlüsselten Kommunikation und zum Zugriff auf Ressourcen des Automatisierungssystems 10 die eindeutige Kennung mit der Positivliste DPL verglichen.

Zusätzlich kann aufgrund eines Bewegungsverlaufs, welcher eine Entsorgung des neuen Werkzeugs 22, beispielsweise in einem Sammelbehälter, indiziert, das neue Werkzeug 22 auch auf eine Negativliste gesetzt werden, sodass das neue Werkzeug 22 von einer weiteren Beteiligung an kryptographisch geschützter Kommunikation des Automatisierungssystems 10 und von einer Nutzung von Ressourcen des Automatisierungssystems 10 dauerhaft ausgeschlossen wird.

Es können nicht allein neue Werkzeuge 22 in das Automatisierungssystem 10 eingebunden werden, sondern es können analog zum vorhergehend beschriebenen Ausführungsbeispiel auch neue Werkzeugsensoren 30 oder sonstige Industriegeräte in das Automatisierungssystem 10 eingebunden werden. Grundsätzlich kann auf die beschriebene Weise auch gleichzeitig oder nacheinander eine Vielzahl von Industriegeräten in das Automatisierungssystem 10 eingebunden werden.

Wie in Fig. 2 dargestellt und oben beschrieben wird bei dem erfindungsgemäßen Verfahren zum Zulassen einer Einbindung des neuen Werkzeugs 22 in das Automatisierungssystem 10 der Bewegungsverlauf des neuen Werkzeugs 22 mittels eines Erfassungsschritts ERF ermittelt und mittels eines Vergleichsschritt COMP mit einem Referenzbewegungsverlauf für das neue Werkzeug 22 verglichen. Es wird die Einbindung des neuen Werkzeugs 22 in Abhängigkeit von dem Bewegungsverlauf mittels eines Entscheidungsschritts DEC zugelassen oder abgelehnt.

## Patentansprüche

1. Verfahren zum Zulassen einer Einbindung eines Geräts (22) in ein Automatisierungssystem (10), bei welchem ein Bewegungsverlauf des Geräts (22) ermittelt wird (ERF) und bei welchem die Einbindung des Geräts (22) in Abhängigkeit von dem Bewegungsverlauf zugelassen (DEC) oder abgelehnt wird.

2. Verfahren zum Zulassen des Geräts nach Anspruch 1, bei welchem die Einbindung zusätzlich abhängig von einer oder mehreren weiteren Berechtigungsinformationen zugelassen (DEC) oder abgelehnt wird.

3. Verfahren nach einem der vorhergehenden Ansprüche, bei welchem die Einbindung eine Bereitstellung eines Kommunikationszugangs und/oder eines Netzwerkzugangs und/oder einer Ressourcenzugriffsberechtigung in oder zum Automatisierungssystem an das Gerät, insbesondere eine Bereitstellung kryptographischen Schlüsselmaterials, insbesondere umfassend ein oder mehrere kryptographische Zertifikate, umfasst.

4. Verfahren nach einem der vorhergehenden Ansprüche, bei welchem der Bewegungsverlauf eine Trajektorie ist oder umfasst.

5. Verfahren nach einem der vorhergehenden Ansprüche, bei welchem der Bewegungsverlauf mit einem Referenzbewegungsverlauf (REFT) verglichen (COMP) wird und die Abhängigkeit von dem Bewegungsverlauf (REFT) danach beurteilt wird, ob die Trajektorie des Geräts (22) zumindest abschnittsweise einen Maximalabstand zu dem Referenzbewegungsverlauf (REFT) unterschreitet.

6. Verfahren nach einem der vorhergehenden Ansprüche, bei welchem der Referenzbewegungsverlauf (REFT) ein Referenz-bewegungsverlauf (REFT) einer Person (P) und/oder eines Referenzgeräts ist.

7. Verfahren nach einem der vorhergehenden Ansprüche, bei welchem das Gerät (22) in Abhängigkeit von dem Bewegungsverlauf des Geräts in eine Positivliste (DPL) und/oder eine Negativliste für eine Einbindung in das Automatisierungssystem (10) aufgenommen wird und/oder in Betrieb genommen wird und/oder außer Betrieb genommen wird.

8. Verfahren nach einem der vorhergehenden Ansprüche, bei welchem der Bewegungsverlauf auf dem Gerät (22) und/oder einem Server (LOS) oder einem Clouddienst oder einer verteilten Datenbank, insbesondere einer Distributed-Ledger-Datenbank und/oder einer Blockchain, gespeichert wird.

9. Vorrichtung, ausgebildet zur Ausführung eines Verfahrens nach einem der vorhergehenden Ansprüche, welche eingerichtet ist, eine Information über einen Bewegungsverlauf des Geräts zu erfassen (ERF) und eine Einbindung des Geräts in Abhängigkeit des Bewegungsverlaufs zuzulassen (DEC) oder abzulehnen.

10. Vorrichtung, nach einem der vorhergehenden Ansprüche, welche ein Lokalisierungsmodul (LO) umfasst, das zur Erfassung (ERF) der Information über den Bewegungsverlauf des Geräts (22) an dem Gerät (22) anordbar oder angeordnet ist und welches Informationen über den Bewegungsverlauf des Geräts (22) und/oder des Lokalisierungsmoduls (LO) aussendet oder bereitstellt sowie aufweisend ein Erfassungsmodul (LOS), welches eingerichtet ist, ausgesendete Informationen des Lokalisierungsmoduls (LO) über den Bewegungsverlauf zu empfangen, wobei die Vorrichtung zusätzlich ein Zulassungsmodul (TC) aufweist, welches zum Zulassen (DEC) der Einbindung des Geräts abhängig von dem Bewegungsverlauf ausgebildet ist.

11. Vorrichtung, bei welcher das Lokalisierungsmodul (LO) zumindest einen RFID-Tag und/oder ein NFC-Tag und/oder ein Bluetooth-Beacon und/oder ein Funkmodul, insbesondere ein 5G-Funkmodul und/oder ein WLAN-Funkmodul und/oder ein Kurzstreckenfunkmodul, aufweist.

12. Vorrichtung nach einem der vorhergehenden Ansprüche, bei welcher das Lokalisierungsmodul (LO) ausgebildet ist, einen Geräteidentifizierer (IDMAP) des Lokalisierungsmoduls (LO) und/oder des Geräts (22) zu erfassen und gemeinsam mit der erfassten Information über die Bewegungshistorie des Geräts (22) zu übermitteln.

13. Automatisierungssystem mit einer Vorrichtung nach einem der vorhergehenden Ansprüche, ausgebildet zur Ausführung eines Verfahrens nach einem der vorhergehenden Ansprüche.
